# FASCICULE DE BREVET EUROPEEN

(11) **EP 3 387 762 B1**
(45) Date de publication et mention de la délivrance du brevet: **27.11.2019**
(21) Numéro de dépôt: 16825451.4
(22) Date de dépôt: 06.12.2016
(51) Int. Cl.: H04B 7/185, G08G 5/00, H04W 4/02, H04W 88/06, H04L 29/08

(54) **PROCÉDÉ DE SÉLECTION, PAR UN TERMINAL, D'UN MODE DE COMMUNICATION POUR ÉCHANGER DES DONNÉES AVEC DES STATIONS DE BASE**
VERFAHREN ZUR AUSWAHL, ÜBER EIN ENDGERÄT, EINES KOMMUNIKATIONSMODUS ZUM AUSTAUSCH VON DATEN MIT BASISSTATIONEN
METHOD OF SELECTING, VIA A TERMINAL, A COMMUNICATION MODE FOR EXCHANGING DATA WITH BASE STATIONS

(30) Priorité: 08.12.2015 FR 1561990
(43) Date de publication de la demande: 17.10.2018
(73) Titulaire: SIGFOX, 31670 Labège (FR)
(72) Inventeur: REGUEIRO, Jon, 31000 Toulouse (FR); FOURTET, Christophe, 82170 Pompignan (FR)
(74) Mandataire: Ipside
(86) Numéro de dépôt international: PCT/FR2016/053218
(87) Numéro de publication internationale: WO 2017/098129

(56) Documents cités:
- EP-A1- 1 379 013
- EP-A1- 1 389 026
- US-A1- 2009 248 287

## Description

### DOMAINE TECHNIQUE

La présente invention appartient au domaine des systèmes de communication sans fil. Plus particulièrement, la présente invention concerne la sélection, par un terminal, d'un mode de communication pour échanger des données avec des stations de base d'un système de communication sans fil.

### ÉTAT DE LA TECHNIQUE

Dans certains systèmes de communication sans fil, les terminaux peuvent avoir à supporter plusieurs modes de communication différents pour échanger des données avec des stations de base. De tels modes de communication sont par exemple à utiliser dans des zones géographiques respectives différentes, pour tenir compte notamment des contraintes règlementaires en vigueur dans chacune de ces zones géographiques.

Par exemple, la bande de fréquences à utiliser pour émettre des signaux, sur un lien montant depuis le terminal vers les stations de base et/ou sur un lien descendant depuis lesdites stations de base vers le terminal, la puissance maximale d'émission des signaux, etc., peuvent varier d'une zone géographique à une autre, à cause de contraintes règlementaires locales.

Dans les systèmes de communication sans fil actuels, par exemple GSM, UMTS, LTE, etc., les stations de base émettent de manière récurrente un signal de diffusion, également connu sous le nom de voie balise (« beacon » dans la littérature anglo-saxonne), qui est utilisé par les terminaux pour sélectionner le mode de communication à utiliser.

Par exemple, la bande de fréquences dans laquelle le signal de diffusion est émis peut varier d'une zone géographique à une autre. Dans un tel cas, le terminal écoute successivement les différentes bandes de fréquences possibles, à la recherche d'un signal de diffusion. Lorsqu'un signal de diffusion est détecté, le terminal peut déduire, de la bande de fréquences dudit signal de diffusion, le mode de communication à utiliser dans la zone géographique où il se trouve.

Dans les applications du type « Internet des objets » (« Internet of Things » ou loT dans la littérature anglo-saxonne), chaque objet de la vie de tous les jours a vocation à devenir un objet communiquant, et est à cet effet équipé d'un terminal d'un système de communication sans fil. On comprend cependant que, dans la mesure du possible, le coût du terminal ne doit pas impacter de façon significative celui de l'objet auquel il est ajouté, afin de pouvoir rendre communiquant beaucoup d'objets de la vie de tous les jours. La consommation électrique desdits terminaux doit également être réduite au maximum, afin de ne pas impacter l'autonomie des objets opérés sur batterie.

En outre, pour réduire les coûts de mise en œuvre d'un système de communication sans fil pour l'IoT, il est également avantageux d'utiliser une bande de fréquences libre de droits. Par exemple, la bande ISM (« Industrial, Scientific and Médical ») comporte des bandes de fréquences dites libres en ce qu'elles peuvent être utilisées sans autorisation administrative préalable, sous réserve de respecter certaines contraintes réglementaires.

Or l'émission de signaux de diffusion dans de telles bandes de fréquences peut s'avérer complexe du fait des contraintes réglementaires à respecter. Notamment, les limitations en termes de taux d'occupation temporelle excluent d'émettre un signal de diffusion de manière continue. En outre, pour pouvoir augmenter la puissance d'émission du signal de diffusion, afin d'augmenter la portée de la station de base qui l'émet, il faut diminuer le taux d'occupation temporelle de la bande de fréquences. Il en résulte que le temps de silence entre deux signaux de diffusion consécutifs peut être long, de même que le temps d'écoute nécessaire pour recevoir un signal de diffusion.

Dans un tel contexte, l'écoute successive de différentes bandes de fréquences, à la recherche d'un signal de diffusion, peut donc prendre du temps et, surtout, est susceptible d'entraîner une consommation électrique trop importante pour un objet opéré sur batterie.

EP1379013 divulgue la sélection d'une cellule de communication BTS par un terminal situé dans un aéronef.

### EXPOSÉ DE L'INVENTION

La présente invention a pour objectif de remédier à tout ou partie des limitations des solutions de l'art antérieur, notamment celles exposées ci-avant, en proposant une solution qui permette à un terminal de sélectionner un mode de communication sans avoir à écouter de manière prolongée une ou plusieurs bandes de fréquences.

A cet effet, et selon un premier aspect, l'invention concerne un procédé de sélection, par un terminal d'un système de communication sans fil, d'un mode de communication à utiliser pour échanger des données avec des stations de base dudit système de communication sans fil, ledit mode de communication étant sélectionné parmi au moins deux modes de communication différents associés à des zones géographiques respectives différentes. Ledit procédé comporte des étapes de :
- réception, par le terminal, d'un message de surveillance émis par un aéronef, le message de surveillance comportant une information sur la position dudit aéronef,
- estimation, par le terminal, de la zone géographique dans laquelle se trouve ledit terminal, en fonction de l'information sur la position de l'aéronef extraite dudit message de surveillance reçu,
- sélection du mode de communication en fonction de la zone géographique estimée dudit terminal.

Ainsi, le procédé de sélection comporte l'estimation, par le terminal, de la zone géographique dans laquelle il se trouve, à partir de laquelle ledit terminal peut en déduire le mode de communication qui doit être utilisé.

Avantageusement, pour estimer la zone géographique dans laquelle il se trouve, ledit terminal utilise les messages de surveillance émis par les aéronefs, chaque message de surveillance comportant une information sur la position de l'aéronef qui a émis ce message de surveillance.

De telles dispositions sont particulièrement avantageuses en ce que de tels messages de surveillance, par exemple des messages ADS-B (« Automatic Dépendent Surveillance-Broadcast ») peuvent généralement être décodés avec des dispositifs de réception simples et peu coûteux à fabriquer.

En outre, il est possible de n'écouter qu'une seule bande de fréquences pour recevoir de tels messages de surveillance, puisque la même bande de fréquences est généralement utilisée partout dans le monde, par exemple la bande de fréquences autour de 1090 MHz dans le cas du lien de données 1090ES (« Mode S Extended Squitter ») de l'ADS-B.

Enfin, le temps d'écoute de la bande de fréquences, pour recevoir un message de surveillance d'un aéronef, peut être très court. A titre d'exemple, dans le cas de messages 1090ES, chaque aéronef émet un message de surveillance, comportant une information sur la position dudit aéronef, de manière sensiblement périodique toutes les 0.4 à 0.6 secondes, la durée de chaque message de surveillance étant de l'ordre de 120 microsecondes. En pratique, un terminal sera souvent à portée de plusieurs aéronefs, de sorte qu'il recevra généralement plusieurs messages 1090ES d'aéronefs différents en moins d'une seconde. On comprend donc que le temps d'écoute nécessaire pour recevoir au moins un message 1090ES, par exemple, peut être extrêmement réduit, de l'ordre de la dizaine de millisecondes voire moins.

Par conséquent, la réception de messages de surveillance d'aéronefs, par un terminal, peut être effectuée au moyen d'un dispositif de réception simple et peu coûteux à fabriquer, peut se limiter à l'écoute d'une seule bande de fréquences, et ce pendant une durée très réduite.

La portée des messages de surveillance d'un aéronef correspond à la distance jusqu'à laquelle un message de surveillance émis par cet aéronef peut être décodé par un dispositif de réception adapté. Par exemple, dans le cas de messages 1090ES, la portée est généralement de l'ordre de 300 kilomètres environ. Par conséquent, la position du terminal qui reçoit un message 1090ES d'un aéronef correspond à la position de cet aéronef à environ 300 kilomètres près. L'estimation de la position du terminal, sur la base d'un seul message de surveillance, n'est donc pas très précise. Toutefois, une telle précision sera le plus souvent suffisante pour distinguer les différentes zones géographiques possibles car, en pratique, celles-ci sont généralement très éloignées les unes des autres (par exemple Etats-Unis et Europe).

Dans des modes particuliers de mise en œuvre, le procédé de sélection peut comporter en outre l'une ou plusieurs des caractéristiques suivantes, prises isolément ou selon toutes les combinaisons techniquement possibles.

Dans des modes particuliers de mise en œuvre, les modes de communication diffèrent par l'un au moins des paramètres suivants :
- bande de fréquences de signaux émis par le terminal,
- bande de fréquences de signaux reçus par le terminal,
- puissance de signaux émis par le terminal,
- débit de données de signaux émis par le terminal,
- méthode d'accès à un canal sur lequel les données sont échangées entre le terminal et les stations de base.

Dans des modes particuliers de mise en œuvre, le message de surveillance reçu de l'aéronef est un message ADS-B.

Dans des modes particuliers de mise en œuvre, le message de surveillance reçu de l'aéronef est un message 1090ES.

Dans des modes particuliers de mise en œuvre, lorsque le terminal reçoit des messages de surveillance émis par plusieurs aéronefs, l'étape d'estimation de la zone géographique du terminal comporte la sélection d'un message de surveillance parmi lesdits messages de surveillance reçus, la zone géographique dudit terminal étant estimée en fonction de l'information sur la position d'aéronef extraite dudit message de surveillance sélectionné.

Dans des modes particuliers de mise en œuvre, lorsque le terminal reçoit des messages de surveillance émis par plusieurs aéronefs, l'étape d'estimation de la zone géographique du terminal comporte l'estimation de la position dudit terminal en fonction des informations sur les positions d'aéronefs extraites de plusieurs messages de surveillance reçus, la zone géographique dudit terminal étant estimée en fonction de la position estimée dudit terminal.

Dans des modes particuliers de mise en œuvre, la zone géographique dans laquelle se trouve le terminal est estimée par comparaison d'une position estimée dudit terminal à des positions de référence associées respectivement aux différentes zones géographiques.

Selon un second aspect, la présente invention concerne un terminal d'un système de communication sans fil, comportant un module de communication adapté à échanger des données avec des stations de base dudit système de communication sans fil selon au moins deux modes de communication différents associés à des zones géographiques respectives différentes. En outre, le terminal comporte :
- un module de surveillance adapté à recevoir un message de surveillance émis par un aéronef, le message de surveillance comportant une information sur la position dudit aéronef,
- un module de contrôle configuré pour estimer la zone géographique dans laquelle se trouve ledit terminal en fonction de l'information sur la position de l'aéronef extraite dudit message de surveillance reçu, et pour sélectionner un mode de communication du module de communication en fonction de la zone géographique estimée dudit terminal.

Dans des modes particuliers de réalisation, le module de surveillance est adapté à recevoir des messages ADS-B.

Dans des modes particuliers de réalisation, le module de surveillance est adapté à recevoir des messages 1090ES.

Dans des modes particuliers de réalisation, le module de communication est configuré pour émettre des signaux à bande ultra-étroite.

### PRÉSENTATION DES FIGURES

L'invention sera mieux comprise à la lecture de la description suivante, donnée à titre d'exemple nullement limitatif, et faite en se référant aux figures qui représentent :
- Figure 1 : une représentation schématique d'un système de communications sans fil,
- Figure 2 : une représentation schématique d'un exemple de réalisation d'un terminal,
- Figure 3: un diagramme illustrant les principales étapes d'un procédé de sélection d'un mode de communication.

Dans ces figures, des références identiques d'une figure à une autre désignent des éléments identiques ou analogues. Pour des raisons de clarté, les éléments représentés ne sont pas à l'échelle, sauf mention contraire.

### DESCRIPTION DÉTAILLÉE DE MODES DE RÉALISATION

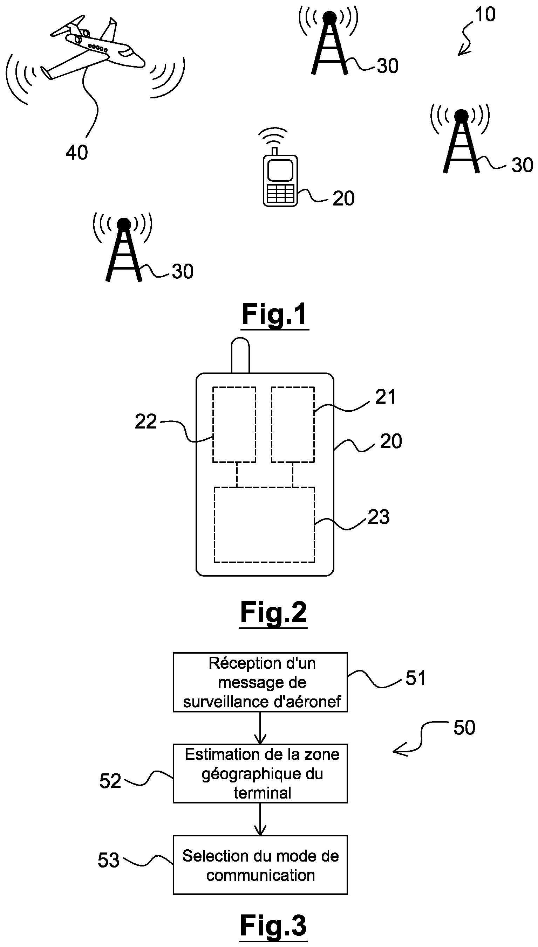

La figure 1 représente schématiquement un système 10 de communication sans fil, comportant un terminal 20 et une pluralité de stations de base 30 réparties sur une zone géographique.

Le terminal 20 et les stations de base 30 échangent des données sous la forme de signaux radioélectriques. Par « signal radioélectrique », on entend une onde électromagnétique se propageant via des moyens non filaires, dont les fréquences sont comprises dans le spectre traditionnel des ondes radioélectriques (quelques hertz à plusieurs centaines de gigahertz).

Dans la suite de la description, on se place de manière non limitative dans le cas où les échanges de données entre le terminal 20 et les stations de base 30 sont bidirectionnels. En d'autres termes, le terminal 20 est adapté à émettre des données sur un lien montant à destination des stations de base 30, et à recevoir des données sur un lien descendant depuis lesdites stations de base 30 vers ledit terminal 20.

Rien n'exclut cependant, suivant d'autres exemples, d'avoir des échanges unidirectionnels, uniquement sur le lien montant ou uniquement sur le lien descendant. En particulier, de nombreuses applications du type loT consistent en de la collecte de données émises par des terminaux 20, et s'accommodent parfaitement d'échanges unidirectionnels, uniquement sur le lien montant entre chaque terminal 20 et les stations de base 30.

Dans la suite de la description, on se place de manière non limitative dans le cas où le système 10 de communication sans fil est à bande ultra étroite. Par « bande ultra étroite » (« Ultra Narrow Band » ou UNB dans la littérature anglo-saxonne), on entend que le spectre fréquentiel instantané des signaux radioélectriques émis par les terminaux 20 est de largeur fréquentielle inférieure à deux kilohertz, voire inférieure à un kilohertz. De telles dispositions sont particulièrement avantageuses en ce que l'émission de tels signaux radioélectriques peut être réalisée avec une consommation électrique très réduite, particulièrement adaptée pour des applications du type loT.

La figure 2 représente schématiquement un exemple de réalisation d'un terminal 20.

Tel qu'illustré par la figure 2, le terminal 20 comporte un module 21 de communication adapté à échanger des données avec les stations de base 30 du système 10 de communication sans fil.

Plus particulièrement, le module 21 de communication supporte au moins deux modes de communication différents. Deux modes de communication différents supportés par le module 21 de communication diffèrent par exemple l'un au moins des paramètres suivants :
- bande de fréquences de signaux émis par le terminal 20,
- bande de fréquences de signaux reçus par le terminal 20,
- puissance de signaux émis par le terminal 20,
- débit de données de signaux émis par le terminal 20,
- méthode d'accès au lien montant ou au lien descendant, etc.

Les différents modes de communication supportés par le module 21 de communication sont à utiliser dans des zones géographiques respectives différentes, et visent par exemple à respecter des contraintes réglementaires locales. Par exemple, les différentes zones géographiques correspondent à :
- la zone géographique regroupant les pays d'Europe, d'Afrique et du Moyen-Orient (« Europe Middle East and Africa » ou EMEA),
- les Etats-Unis (« United States of America » ou USA),
- la zone géographique regroupant les pays d'Amérique Latine (« Latin America » ou LATAM), etc.

Ainsi, lorsque le terminal 20 se trouve dans une première zone géographique (par exemple EMEA), le module 21 de communication dudit terminal 20 utilise un premier mode de communication pour échanger des données avec les stations de base 30 réparties dans cette première zone géographique. Lorsque le terminal 20 se trouve dans une seconde zone géographique (par exemple USA), le module 21 de communication utilise un second mode de communication pour échanger des données avec les stations de base 30 réparties dans cette seconde zone géographique, etc.

On comprend donc que terminal 20 doit pouvoir adapter le mode de communication utilisé par le module 21 de communication pour échanger des données avec les stations de base 30 de la zone géographique dans laquelle il se trouve, en particulier si le terminal 20 peut être déplacé d'une zone géographique à une autre et/ou lors de la première mise en fonctionnement dudit terminal 20 dans une zone géographique non connue a priori, etc.

Tel qu'illustré par la figure 2, le terminal 20 comporte à cet effet :
- un module 22 de surveillance adapté à recevoir des messages de surveillance émis par des aéronefs 40, chaque message de surveillance comportant une information sur la position de l'aéronef 40 qui l'a émis,
- un module 23 de contrôle configuré pour sélectionner le mode de communication à utiliser en fonction des informations sur les positions d'aéronefs 40 extraites des messages de surveillance reçus.

Le module 23 de contrôle comporte par exemple un ou plusieurs processeurs et des moyens de mémorisation (disque dur magnétique, mémoire électronique, disque optique, etc.) dans lesquels est mémorisé un produit programme d'ordinateur, sous la forme d'un ensemble d'instructions de code de programme à exécuter pour mettre en œuvre les étapes permettant de sélectionner le mode de communication du module 21 de communication à partir des informations sur les positions d'aéronefs, à proximité du terminal 20, extraites des messages de surveillance reçus. Dans une variante, le module 23 de contrôle comporte un ou des circuits logiques programmables (FPGA, PLD, etc.), et/ou un ou des circuits intégrés spécialisés (ASIC), etc., adaptés à mettre en œuvre tout ou partie desdites étapes.

En d'autres termes, le module 23 de contrôle comporte un ensemble de moyens configurés de façon logicielle (produit programme d'ordinateur spécifique) et/ou matérielle (FPGA, PLD, ASIC, etc.) pour mettre en œuvre les étapes permettant de sélectionner le mode de communication du module 21 de communication à partir des informations sur les positions d'aéronefs extraites des messages de surveillance reçus.

Le module 22 de surveillance est par exemple adapté à recevoir des messages ADS-B. Dans la suite de la description, on se place de manière non limitative dans le cas où le module 22 de surveillance est adapté à recevoir des messages ADS-B de type 1090ES (« Mode S Extended Squitter »).

La figure 3 représente schématiquement les principales étapes d'un procédé 50 de sélection de mode de communication mis en œuvre par le terminal 20, lesquelles sont :
- 51 réception, par le module 22 de surveillance, d'un message 1090ES émis par un aéronef 40, ledit message 1090ES comportant une information sur la position dudit aéronef qui l'a émis,
- 52 estimation, par le module 23 de contrôle, de la zone géographique dans laquelle se trouve le terminal 20, en fonction de l'information sur la position de l'aéronef 40 extraite du message 1090ES reçu de cet aéronef,
- 53 sélection, en fonction de la zone géographique estimée dudit terminal 20, du mode de communication à utiliser pour échanger des données avec les stations de base 30 à proximité.

Ainsi, au cours de l'étape 51 de réception, le module 22 de surveillance reçoit un message 1090ES et extrait l'information, incluse dans ce message 1090ES, sur la position de l'aéronef 40 qui l'a émis. L'information sur la position correspond par exemple aux coordonnées GPS (« Global Positioning System ») de l'aéronef 40. Au cours de l'étape 51 de réception, il est possible de ne recevoir qu'un seul message 1090ES, ou bien de recevoir plusieurs messages 1090ES pouvant être émis par des aéronefs 40 différents.

Au cours de l'étape 52 d'estimation de la zone géographique dans laquelle se trouve le terminal 20, le module 23 de contrôle estime la zone géographique dans laquelle se trouve le terminal 20.

Suivant un exemple de mise en œuvre particulièrement simple, lorsqu'un seul message 1090ES est reçu par le module 22 de surveillance, le module 23 de contrôle estime la position du terminal 20 comme étant égale à l'information de position extraite du message 1090ES reçu.

Tel qu'indiqué précédemment, une telle estimation de la position du terminal 20, sur la base d'un seul message 1090ES, n'est pas très précise dans la mesure où la portée d'un message 1090ES est de l'ordre de 300 kilomètres. Toutefois, une telle précision sera le plus souvent suffisante pour distinguer les différentes zones géographiques possibles car celles-ci sont généralement très éloignées les unes des autres (par exemple USA et EMEA).

Pour améliorer la précision de l'estimation de la position du terminal 20, il est possible de prendre en compte plusieurs messages 1090ES, de préférence émis par plusieurs aéronefs 40.

Suivant un premier exemple, lorsque le module 22 de surveillance du terminal 20 reçoit des messages 1090ES émis par plusieurs aéronefs 40, l'étape 52 d'estimation de la zone géographique du terminal 20 comporte la sélection d'un message 1090ES parmi lesdits messages 1090ES reçus. Par exemple, le message 1090ES sélectionné est celui reçu avec la puissance la plus élevée, et la position du terminal 20 est estimée comme étant égale à l'information de position extraite du message 1090ES sélectionné. En effet, le message 1090ES reçu avec la puissance la plus élevée sera généralement celui émis par l'aéronef 40 le plus proche du terminal 20, de sorte que la distance entre cet aéronef 40 et ledit terminal 20 sera en général très inférieure à la portée maximale (300 kilomètres) des messages 1090ES.

Suivant un autre exemple, lorsque le module 22 de surveillance du terminal 20 reçoit des messages 1090ES émis par plusieurs aéronefs 40, la zone géographique dans laquelle se trouve le terminal 20 comporte l'estimation de la position dudit terminal en fonction des informations sur les positions d'aéronefs 40 extraites de plusieurs messages 1090ES reçus. Par exemple, en considérant une portée de 300 kilomètres pour les messages 1090ES, la zone de couverture d'un aéronef 40 correspond sensiblement à un disque, de rayon égal à 300 kilomètres, centré sur la position de l'aéronef 40. Le terminal 20, qui reçoit des messages 1090ES de plusieurs aéronefs 40, se trouve donc dans l'intersection des zones de couverture de ces aéronefs 40. La position estimée dudit terminal 20 peut être une position quelconque à l'intérieur de l'intersection desdites zones de couverture desdits aéronefs ou, de préférence, la barycentre des positions des aéronefs 40 pondérées par exemple respectivement par les puissances de réception des messages 1090ES reçus de ces aéronefs.

Ensuite, la zone géographique dans laquelle se trouve le terminal 20 peut être estimée à partir de la position estimée dudit terminal 20.

Par exemple, le terminal 20 peut mémoriser dans une mémoire non-volatile, sous toute forme adaptée, une carte délimitant les différentes zones géographiques permettant, à partir de la position estimée du terminal 20, de déterminer la zone géographique dans laquelle se trouve ledit terminal 20.

Afin de réduire la quantité d'informations mémorisées dans une mémoire non-volatile dudit terminal 20, il est possible de ne mémoriser qu'une ou plusieurs positions de référence à l'intérieur de chaque zone géographique. Pour estimer la zone géographique dans laquelle se trouve le terminal 20, il suffit alors de comparer la position estimée dudit terminal 20 à chacune des positions de référence, la zone géographique estimée correspondant alors à celle à l'intérieur de laquelle se trouve la position de référence la plus proche de la position estimée dudit terminal 20.

Une fois que la zone géographique dans laquelle se trouve le terminal 20 a été estimée, l'étape 53 de sélection du mode de communication revient à choisir le mode de communication associé à la zone géographique estimée. A cet effet, le terminal 20 comporte par exemple une mémoire non-volatile dans laquelle est mémorisée une table comportant, pour chaque zone géographique possible, le mode de communication associé.

Le tableau 1 ci-dessous donne un exemple non limitatif de table pouvant être mémorisée dans une mémoire non-volatile du terminal 20. Dans cet exemple, on considère les zones géographiques EMEA, USA, et LATAM et, pour chaque zone géographique, une seule position de référence.

**Tableau 1 : Exemples de zones géographiques**

| Zone géographique | Position de référence | Mode de communication |
|---|---|---|
| EMEA | Paris (48.86 ; 2.35) | MC1 |
| USA | New York (40.71 ; -74.01) | MC2 |
| LATAM | Sao Paulo (-23.55 ; -46.64) | MC3 |

Par exemple, un terminal 20 situé à Barcelone peut recevoir un message 1090ES d'un aéronef 40 situé aux alentours de Toulouse. Dans un tel cas, la position estimée dudit terminal 20, sur la base de ce seul message 1090ES, est considérée comme étant égale à la position de l'aéronef 40, qui correspond sensiblement à la position de Toulouse. La comparaison de la position estimée du terminal 20 aux positions de référence donne sensiblement les résultats suivants :
- distance entre le terminal 20 et Paris : 830 kilomètres,
- distance entre le terminal 20 et New York : 6162 kilomètres,
- distance entre le terminal 20 et Sao Paulo : 8740 kilomètres.

Par conséquent, le terminal 20 détermine que la position de référence la plus proche correspond à celle associée à la zone géographique EMEA. La zone géographique estimée est la zone géographique EMEA, de sorte que le mode de communication sélectionné est le mode de communication MC1.

Le tableau 2 ci-dessous donne des exemples de modes de communication MC1, MC2, MC3 associés respectivement aux zones géographiques EMEA, USA, LATAM. Dans cet exemple, les modes de communication peuvent différer, d'un mode de communication à un autre, par :
- la puissance de signaux émis par le terminal 20 (« Puissance TX » dans le tableau ci-dessous),
- la bande de fréquences des signaux émis par le terminal 20 (« Bande TX » dans le tableau ci-dessous),
- la bande de fréquences des signaux reçus par la terminal 20 (« Bande RX » dans le tableau ci-dessous),
- le débit de données de signaux émis par le terminal 20 (« Débit » dans le tableau ci-dessous),
- la méthode d'accès au lien montant, en l'occurrence l'obligation ou non d'écouter le lien montant avant d'émettre (« Listen Before Talk » ou LBT dans le tableau ci-dessous).

**Tableau 2 : Exemples de modes de communications**

| Mode de communication | Puissance TX (dBm) | Bande TX (MHz) | Bande RX (MHz) | Débit (bps) | LBT |
|---|---|---|---|---|---|
| MC1 | 14 | 868.13 | 869.525 | 100 | Non |
| MC1 | 22 | 902.8 | 905.8 | 600 | Non |
| MC3 | 30 | 915.5 | 916.2 | 600 | Oui |

De manière plus générale, il est à noter que les modes de mise en œuvre et de réalisation considérés ci-dessus ont été décrits à titre d'exemples non limitatifs, et que d'autres variantes sont par conséquent envisageables.

Notamment, l'invention a été décrite en considérant principalement des messages de surveillance de type 1090ES. Rien n'exclut cependant, suivant d'autres exemples, d'avoir un module 22 de surveillance adapté à recevoir, alternativement ou en complément, d'autres types de messages ADS-B, par exemple UAT (« Universal Access Transponder » à 978 MHz) et/ou VDL Mode 4 (« VHF Data Link Mode 4 »). On note également que, de manière plus générale, l'invention est applicable à tout type de message de surveillance émis par un aéronef, dès lors que celui-ci comporte une information sur la position dudit aéronef qui l'a émis. L'invention est en outre applicable à tout type d'aéronef (avion, ballon, drone, hélicoptère, etc.) susceptible d'émettre de tels messages de surveillance.

En outre, l'invention a été décrite en considérant uniquement des modes de communication utilisés par un terminal 20 pour émettre des signaux sur un lien montant, depuis le terminal 20 vers les stations de base 30. L'invention peut également être utilisée, alternativement ou en complément, sur un lien descendant depuis une station de base 30 vers des terminaux 20. En d'autres termes, l'invention est applicable de manière plus générale à la sélection, par un dispositif émetteur, d'un mode de communication à utiliser pour échanger des données avec un dispositif récepteur du système 10 de communication sans fil, ledit dispositif émetteur pouvant être un terminal, une station de base, un point d'accès, une télécommande ou tout autre type de dispositif de communication sans fil utilisant des modes de communication différents associés à des zones géographiques respectives différentes.

En outre, l'invention a été décrite en se plaçant dans le cas où le système 10 de communication sans fil est à bande ultra étroite. Rien n'exclut cependant de considérer d'autres types de systèmes de communication sans fil. Il est également possible, pour un même terminal 20, d'avoir des modes de communication qui diffèrent par la largeur fréquentielle du spectre fréquentiel instantané des signaux radioélectriques émis. Dans un tel cas, il est possible qu'une partie seulement des modes de communication supportés par le terminal 20 soient à bande ultra étroite.

## Revendications

1. Procédé (50) de sélection, par un terminal (20) d'un système (10) de communication sans fil, d'un mode de communication à utiliser pour échanger des données avec des stations de base (30) dudit système de communication sans fil, ledit mode de communication étant sélectionné parmi au moins deux modes de communication différents associés à des zones géographiques respectives différentes, **caractérisé en ce que** ledit procédé (50) comporte des étapes de :
- (51) réception, par le terminal (20), d'un message de surveillance émis par un aéronef (40), le message de surveillance comportant une information sur la position dudit aéronef,
- (52) estimation, par le terminal (20), de la zone géographique dans laquelle se trouve ledit terminal, en fonction de l'information sur la position de l'aéronef extraite dudit message de surveillance reçu,
- (53) sélection du mode de communication en fonction de la zone géographique estimée dudit terminal (20).

2. Procédé (50) selon la revendication 1, dans lequel les modes de communication diffèrent par l'un au moins des paramètres suivants :
- bande de fréquences de signaux émis par le terminal,
- bande de fréquences de signaux reçus par le terminal,
- puissance de signaux émis par le terminal,
- débit de données de signaux émis par le terminal,
- méthode d'accès à un canal sur lequel les données sont échangées entre le terminal (20) et les stations de base (30).

3. Procédé (50) selon l'une des revendications 1 à 2, dans lequel le message de surveillance reçu de l'aéronef (40) est un message ADS-B.

4. Procédé (50) selon la revendication 3, dans lequel le message de surveillance reçu de l'aéronef (40) est un message 1090ES.

5. Procédé (50) selon l'une des revendications 1 à 4, dans lequel, lorsque le terminal (20) reçoit des messages de surveillance émis par plusieurs aéronefs (40), l'étape (52) d'estimation de la zone géographique du terminal (20) comporte la sélection d'un message de surveillance parmi lesdits messages de surveillance reçus, la zone géographique dudit terminal étant estimée en fonction de l'information sur la position d'aéronef (40) extraite dudit message de surveillance sélectionné.

6. Procédé (50) selon l'une des revendications 1 à 4, dans lequel, lorsque le terminal (20) reçoit des messages de surveillance émis par plusieurs aéronefs (40), l'étape (52) d'estimation de la zone géographique du terminal (20) comporte l'estimation de la position dudit terminal en fonction des informations sur les positions d'aéronefs extraites de plusieurs messages de surveillance reçus, la zone géographique dudit terminal étant estimée en fonction de la position estimée dudit terminal (20).

7. Procédé (50) selon l'une des revendications 1 à 6, dans lequel la zone géographique dans laquelle se trouve le terminal (20) est estimée par comparaison d'une position estimée dudit terminal à des positions de référence associées respectivement aux différentes zones géographiques.

8. Terminal (20) d'un système (10) de communication sans fil, comportant un module (21) de communication adapté à échanger des données avec des stations de base (30) dudit système de communication sans fil selon au moins deux modes de communication différents associés à des zones géographiques respectives différentes, **caractérisé en ce que** le terminal (20) comporte :
- un module (22) de surveillance adapté à recevoir un message de surveillance émis par un aéronef (40), le message de surveillance comportant une information sur la position dudit aéronef,
- un module (23) de contrôle configuré pour estimer la zone géographique dans laquelle se trouve ledit terminal (20) en fonction de l'information sur la position de l'aéronef (40) extraite dudit message de surveillance reçu, et pour sélectionner un mode de communication du module (21) de communication en fonction de la zone géographique estimée dudit terminal (20).

9. Terminal (20) selon la revendication 8, dans lequel le module (22) de surveillance est adapté à recevoir des messages ADS-B.

10. Terminal (20) selon la revendication 9, dans lequel le module (22) de surveillance est adapté à recevoir des messages 1090ES.

11. Terminal (20) selon l'une des revendications 8 à 10, dans lequel le module (21) de communication est configuré pour émettre des signaux à bande ultra-étroite.

## Patentansprüche

1. Verfahren (50) zur Auswahl, durch ein Endgerät (20) eines drahtlosen Kommunikationssystems (10), eines Kommunikationsmodus, der zum Austauschen von Daten mit Basisstationen (30) des drahtlosen Kommunikationssystems verwendet werden soll, wobei der Kommunikationsmodus aus mindestens zwei unterschiedlichen Kommunikationsmodi ausgewählt wird, die jeweils unterschiedlichen geografischen Gebieten zugeordnet sind, **dadurch gekennzeichnet, dass** das Verfahren (50) Schritte umfasst des:
- (51) Empfangens, durch das Endgerät (20), einer von einem Flugzeug (40) gesendeten Überwachungsnachricht, wobei die Überwachungsnachricht eine Information über die Position des Flugzeugs umfasst,
- (52) Schätzens, durch das Endgerät (20), des geografischen Gebiets, in dem sich das Endgerät befindet, in Abhängigkeit von der Information über die Position des Flugzeugs, die aus der empfangenen Überwachungsnachricht extrahiert wird,
- (53) Auswählens des Kommunikationsmodus in Abhängigkeit vom geschätzten geografischen Gebiet des Endgeräts (20).

2. Verfahren (50) nach Anspruch 1, wobei sich die Kommunikationsmodi durch mindestens einen der folgenden Parameter unterscheiden:
- Frequenzband von Signalen, die vom Endgerät gesendet werden,
- Frequenzband von Signalen, die vom Endgerät empfangen werden,
- Leistung von Signalen, die vom Endgerät gesendet werden,
- Datenrate von Signalen, die vom Endgerät gesendet werden,
- Zugriffsmethode auf einen Kanal, auf dem die Daten zwischen dem Endgerät (20) und den Basisstationen (30) ausgetauscht werden.

3. Verfahren (50) nach einem der Ansprüche 1 bis 2, wobei die vom Flugzeug (40) empfangene Überwachungsnachricht eine ADS-B-Nachricht ist.

4. Verfahren (50) nach Anspruch 3, wobei die vom Flugzeug (40) empfangene Überwachungsnachricht eine 1090ES-Nachricht ist.

5. Verfahren (50) nach einem der Ansprüche 1 bis 4, wobei, wenn das Endgerät (20) Überwachungsnachrichten empfängt, die von mehreren Flugzeugen (40) gesendet werden, der Schritt (52) des Schätzens des geografischen Gebiets des Endgeräts (20) das Auswählen einer Überwachungsnachricht aus den empfangenen Überwachungsnachrichten umfasst, wobei das geografische Gebiet des Endgeräts in Abhängigkeit von der Information über die Flugzeugposition (40) geschätzt wird, die aus der ausgewählten Überwachungsnachricht extrahiert wird.

6. Verfahren (50) nach einem der Ansprüche 1 bis 4, wobei, wenn das Endgerät (20) Überwachungsnachrichten empfängt, die von mehreren Flugzeugen (40) gesendet werden, der Schritt (52) des Schätzens des geografischen Gebiets des Endgeräts (20) das Schätzen der Position des Endgeräts in Abhängigkeit von den Informationen über die Flugzeugpositionen umfasst, die aus mehreren empfangenen Überwachungsnachrichten extrahiert werden, wobei das geografische Gebiet des Endgeräts in Abhängigkeit von der geschätzten Position des Endgeräts (20) geschätzt wird.

7. Verfahren (50) nach einem der Ansprüche 1 bis 6, wobei das geografische Gebiet, in dem sich das Endgerät (20) befindet, durch Vergleichen einer geschätzten Position des Endgeräts mit Referenzpositionen geschätzt wird, die jeweils den unterschiedlichen geografischen Gebieten zugeordnet sind.

8. Endgerät (20) eines drahtlosen Kommunikationssystems (10), das ein Kommunikationsmodul (21) umfasst, welches dazu geeignet ist, Daten mit Basisstationen (30) des drahtlosen Kommunikationssystems gemäß mindestens zwei unterschiedlichen Kommunikationsmodi auszutauschen, die jeweils unterschiedlichen geografischen Gebieten zugeordnet sind, **dadurch gekennzeichnet, dass** das Endgerät (20) umfasst:
- ein Überwachungsmodul (22), das dazu geeignet ist, eine von einem Flugzeug (40) gesendete Überwachungsnachricht zu empfangen, wobei die Überwachungsnachricht eine Information über die Position des Flugzeugs umfasst,
- ein Steuermodul (23), das dafür konfiguriert ist, das geografische Gebiet, in dem sich das Endgerät (20) befindet, in Abhängigkeit von der Information über die Position des Flugzeugs (40), die aus der empfangenen Überwachungsnachricht extrahiert wird, zu schätzen, und dafür, in Abhängigkeit vom geschätzten geografischen Gebiet des Endgeräts (20) einen Kommunikationsmodus des Kommunikationsmoduls (21) auszuwählen.

9. Endgerät (20) nach Anspruch 8, wobei das Überwachungsmodul (22) dafür geeignet ist, ADS-B-Nachrichten zu empfangen.

10. Endgerät (20) nach Anspruch 9, wobei das Überwachungsmodul (22) dafür geeignet ist, 1090ES-Nachrichten zu empfangen.

11. Endgerät (20) nach einem der Ansprüche 8 bis 10, wobei das Kommunikationsmodul (21) dafür konfiguriert ist, Ultra-Schmalband-Signale zu senden.

## Claims

1. Method (50) of selecting, by a terminal (20) of a wireless communication system (10), of a communication mode to be used to exchange data with base stations (30) of said wireless communication system, wherein said communication mode is selected from among at least two different communication modes associated with different respective geographical zones, and **characterized in that** said method (50) includes steps of:
- reception (51), by the terminal (20), of a surveillance message transmitted by an aircraft (40), said surveillance message comprising information on the position of said aircraft,
- estimation (52), by the terminal (20), of the geographical zone where said terminal is located, as a function of the information on the position of the aircraft extracted from said received surveillance message,
- selection (53) of the communication mode as a function of the estimated geographical zone of said terminal (20).

2. Method (50) according to claim 1, wherein the communication modes differ by at least one of the following parameters:
- frequency band of the signals transmitted by the terminal,
- frequency band of the signals received by the terminal,
- power of the signals transmitted by the terminal,
- data throughput of the signals transmitted by the terminal,
- method of access to a channel on which data is exchanged between the terminal (20) and base stations (30).

3. Method (50) according to any of the claims 1 to 2, wherein the surveillance message received by the aircraft (40) is an ADS-B message.

4. Method (50) according to claim 3, wherein the surveillance message received from the aircraft (40) is a 1090ES message.

5. Method (50) according to any of the claims 1 to 4, wherein when the terminal (20) receives surveillance messages transmitted by several aircrafts (40), the step (52) of estimating the geographical zone of the terminal (20) includes selecting a surveillance message among said received surveillance messages, and the geographical zone of said terminal is estimated as a function of the information on the position of the aircraft (40) extracted from said selected surveillance message.

6. Method (50) according to any of the claims 1 to 4, wherein when the terminal (20) receives surveillance messages transmitted by several aircrafts (40), the step (52) of estimating the geographical zone of the terminal (20) includes estimating the position of said terminal as a function of the information on the positions of several aircrafts extracted from several received surveillance messages, and the geographical zone of said terminal is estimated as a function of the estimated position of said terminal (20).

7. Method (50) according to any of the claims 1 to 6, wherein the geographical zone in which the terminal (20) is located is estimated by comparing an estimated position of said terminal with reference positions associated respectively with the different geographical zones.

8. Terminal (20) of a wireless communication system (10), comprising a communication module (21) adapted to exchange data with base stations (30) of said wireless communication system according to at least two different communication modes associated with different respective geographical zones, and **characterized in that** the terminal (20) includes:
- a surveillance module (22) adapted to receive a surveillance message transmitted by an aircraft (40), said surveillance message comprising information on the position of said aircraft,
- a control module (23) configured to estimate the geographical zone in which said terminal (20) is located as a function of the information on the position of the aircraft (40) extracted from the received surveillance message, and to select a communication mode of the communication module (21) as a function of the estimated geographical zone of said terminal (20).

9. Terminal (20) according to claim 8, wherein the surveillance module (22) is adapted to receive ADS-B messages.

10. Terminal (20) according to claim 9, wherein the surveillance module (22) is adapted to receive 1090ES messages.

11. Terminal (20) according to any of the claims 8 to 10, wherein the communication module (21) is configured to transmit Ultra Narrow Band signals.
